# EUROPEAN PATENT SPECIFICATION

(11) **EP 1 957 601 B1**
(45) Date of publication and mention of the grant of the patent: **26.05.2010**
(21) Application number: 06839134.1
(22) Date of filing: 06.12.2006
(51) Int. Cl.: C09K 8/035, C09K 8/08, C09K 8/12, C09K 8/20, C09K 8/24

(54) **SOLVENT FREE FLUIDIZED POLYMER SUSPENSIONS FOR OILFIELD SERVICING FLUIDS**
LÖSUNGSMITTELFREIE VERFLÜSSIGTE POLYMER-SUSPENSIONEN FÜR ÖLFELD-WARTUNGSFLÜSSIGKEITEN
SUSPENSIONS POLYMERIQUES FLUIDISEES EXEMPTES DE SOLVANT POUR FLUIDES D ENTRETIEN DE CHAMPS PETROLIERS

(30) Priority: 08.12.2005 US 748452 P
(43) Date of publication of application: 20.08.2008
(73) Proprietor: HERCULES INCORPORATED, Wilmington, DE 19894-0001 (US)
(72) Inventor: MELBOUCI, Mohand, Wilmington, DE 19808 (US)
(74) Representative: HOFFMANN EITLE
(86) International application number: PCT/US2006/046633
(87) International publication number: WO 2007/067668

(56) References cited:
- EP-A1- 1 223 207
- WO-A-02/092720
- WO-A-2006/082356

## Description

### RELATED APPLICATIONS

This application claims the benefit of U.S. Provisional Application Serial No. 60/748,452 filed on December 8, 2005, which is incorporated herein by reference in its entirety.

### FIELD OF THE INVENTION

This invention relates to a composition and use application of solvent free fluidized polymer suspensions of cellulosic derivatives and/or polyvinyl alcohol (PVA) for use in oil field applications such completion fluids, drilling fluids and oil well cement slurries as rheology/viscosity modifier and fluid loss reducer. The slurry composition contains PLONOR (pose little or no risk to the environment) listed ingredients, particularly suitable for use in the North Sea sector.

### BACKGROUND OF INVENTION

Among a variety of additives, hydroxyethyl cellulose (HEC) is widely used in oilfield water-based fluids. While high viscosity types of HEC are generally used, in completion fluids, for rheology and fluid loss control properties, the low viscosity HEC is typically used, in oil-well cement slurries and drill-in-fluids, for filtration control properties. In some cases, both high viscosity and low viscosity HECs are used together to further optimize the overall properties, especially in cement slurries. While low weight average molecular weight (Mw) HECs are preferred fluid loss additives for medium temperature cementing, PVA is more preferred for low temperature conditions.

For easy handling in oil and gas well rigs, oilfield operations, especially offshore, require the use of liquid substances / preparations whose discharge from offshore installations does not need to be strongly regulated. A variety of environmentally acceptable solvent based polymer suspensions have been used for the past a few years. These suspensions are based on either mineral oil or glycols. However, this type of suspensions still faces some use restrictions as none of them meets the entire regulatory requirements regarding the aquatic toxicity, biodegradability and bio-accumulation. Strict environmental regulations for the North Sea have required oil field service companies to reformulate their products so that their affect on the marine environment is minimized and that the components of the products comprise approved components.

For use in the North Sea, chemical products are categorized into one of four (4) categories according to the ecotoxicological properties of its components. The four categories, each designated by color, are as follows:
Black: Forbidden to use or discharge;
Red: High priority for phasing out via substitution;
Yellow: Environmentally acceptable; and
Green: Only for chemicals listed on OSPAR Convention for the Protection of the Marine Environment of the North East Atlantic PLONAR (Pose Little Or No Risk) database.

For oil and gas drilling operations in the North Sea, companies are required to phase out the use of Black and Red components in products and to use only new chemicals which are entirely composed of "Green" components.

U.S. patent 5,268,466 to Burdick discloses that stable suspension of water soluble polysaccharides selected from the group of HEC, CMHEC, HM-HEC, HMEHEC, MC, MHEC, MHPC, EC and Guar/Guar derivatives can be prepared in a solution of 12 to 40 wt.% dibasic potassium phosphate. The suspension includes 15 - 30 wt.% of said polysaccharide. The suspension further includes a stabilizing amount of xanthan gum. The industrial application of these stable suspensions was recited as for use in construction and coating materials such as joint compounds and latex paints.

The need exists for liquid substances / preparations whose discharge from offshore installations do not pose a significant risk to the marine environment by virtue of the fact that the components of the liquid substances / preparations comprise approved PLONAR components while maintaining the functionality of these liquid substances / preparations in oilfield servicing fluids, such as drilling fluids, completion/workover fluids, fracturing fluids and oil well cementing fluids.

### SUMMARY OF THE INVENTION

The present invention is related to a suspension composition comprising an oil field servicing fluid selected from the group consisting of drilling fluids, completion/workover fluids, and oil well cementing fluids, and a fluid polymer suspension comprising a water soluble polymer suspended in an aqueous solution of a potassium phosphate compound. The water soluble polymer is selected from the group consisting of water soluble polysaccharides and polyvinyl alcohol (PVA). The water soluble polysaccharides may be selected from the group consisting of cellulose ethers, guar and guar derivatives. . The cellulose ether can be hydroxyethyl cellulose (HEC), methyl cellulose (MC), hydroxypropyl cellulose (HPC), ethyl hydroxyethyl cellulose (EHEC), methyl hydroxyethyl cellulose (MHEC), hydrophobically modified hydroxyethyl cellulose (HMHEC), hydrophobically modified ethyl hydroxyethyl cellulose (HMEHEC), hydrophobically modified methyl hydroxyethyl cellulose (HMMHEC), ethyl cellulose (EC), methyl hydroxypropyl cellulose (MHPC), and carboxymethyl hydroxyethyl cellulose (CMHEC). The oilfield servicing fluids include drilling fluids, completion / workover fluids, fracturing fluids and oil well cementing fluids.

### DETAILED DESCRIPTION OF THE INVENTION

It has been surprisingly found that a potassium phosphate compound that is environmentally friendly can be used in oilfield servicing fluids for providing efficient and superior results in oilfield usages. This invention provides an improved suspension of water soluble polymer in a concentrated aqueous salt solution of potassium phosphate based on the composition of matter described in the U.S. patent 5,268,466, the disclosure of which is incorporated herein by reference in its entirety. One benefit of the compositions of the present invention is that the entire suspension components may be selected from the OSPAR Convention for the Protection of the Marine Environment of the North East Atlantic PLONOR list of additives approved for use in the North Sea sector. It is noted that not all potassium phosphate salts are on the PLONOR list.

It was discovered that suspensions of water soluble polymer, preferably water soluble polysaccharide, more preferably cellulose ethers, guar or guar derivatives, still more preferably the cellulose ethers selected from the group consisting of HEC, MC, HPC, EHEC, MHEC, HMHEC, HMEHEC, HMMHEC, EC, MHPC and CMHEC, still more preferably HEC in a concentrated aqueous potassium phosphate compound, preferably dibasic potassium phosphate anhydrous (CAS #7758-11-4), thereby providing a composition that is entirely composed of components listed as PLONOR substances. This composition may be stabilized with a minor amount of low molecular CMC, xanthan gum and/or sodium alginate.

The potassium phosphate compound of use in the present invention may be selected from the group consisting of potassium phosphate, potassium phosphate dibasic (K₂HPO₄), potassium phosphate tribasic (K₃PO₄), potassium phosphate monobasic (KH₂PO₄) and phosphoric acid potassium salt (2:1) (KH₅(PO₄)²) and mixtures thereof. The preferred potassium phosphate compound being potassium phosphate dibasic (K₂HPO₄). One advantage of using potassium phosphate compounds in the suspension compositions of the present invention is that the suspension compositions become essentially self-preserving without the need for additional preservatives, which are typically not approved PLONAR materials.

The suspension composition of this invention comprise the following components: water, potassium phosphate compound, preferably dibasic potassium phosphate anhydrous about 10 - 40 wt.% preferably about 20 - 30 wt%, more preferably about 25 wt% of the fluid polymer suspension and a water soluble polymer, preferably water soluble polysaccharide, more preferably a cellulose ether, still more preferably HEC. The suspension composition of the invention may additionally comprise an effective amount of a stabilizer which functions to stabilize the fluid polymer suspension with long term stability and to prevent settling of the components. The effective amount of stabilizer may be up to about 2 wt%, preferably up to about 1 wt %, still more preferably up to about 0.5 wt% of the fluid polymer suspension. The stabilizer may be a low molecular weight (Mw) sodium carboxymethylcellulose (CMC) such as for example Blanose^{®} 7L1 sodium carboxymethylcellulose, available from Hercules Incorporated. Alternatively the stabilizer may be a xanthan gum, such as Rhodopol^{®} 23 standard grade xanthan gum available from Rhodia USA or a sodium alginate. Alternatively, combinations of CMC and xanthan gum may be used. CMC and xanthan gum are added to the fluid polymer suspension to provide a long-term stability.

It was discovered that in addition to water soluble polysaccharides, synthetic polymers such as polyvinyl alcohol (PVA) could also be suspended in such a fluid polymer suspension. Depending upon the type of water soluble polymer, stable and flowable fluidized polymer suspensions containing about 5 - 50 wt%, preferably about 10 - 40 wt% more preferably about 20 - 25 wt% water soluble polymer of the fluid polymer suspension can be prepared.

The examples are presented to illustrate the invention, parts and percentages being by weight, unless otherwise indicated.

### EXAMPLES

Typical fluid polymer suspension and related long-term stability are given in Tables 1 and 2. No polymer settling was noticed after 6 weeks storage at room temperature. The fluid polymer suspensions were additionally tested for freeze/thaw stability (three cycles). The fluid polymer suspensions remained stable and flowable.

**Table 1: Detailed Suspensions Composition**

| **Ingredients** | **Suspension 1** | **Suspension 2** | **Suspension 3** | **Suspension 4** |
|---|---|---|---|---|
| DI water | 53.09% | 49.71% | 53.09% | 52.95% |
| Rhadopol^{®} 23 xanthan gum, available from Rhodia USA | 0.11% | 0.10% | 0.11% | 0.13% |
| Blanose^{®} 7L1C1sodium carboxymethyl cellulose, available from Hercules Incorporated | 0.27% | 0.25% | 0.27% | 0.45% |
| KH₂PO4, Anhydrous, | 26.54% | 24.85% | 26.54% | - |
| KH₂PO₄, 3H₂O | - | - | - | 26.47% |
| Natrosol^{®} 180 GXR hydroxyethyl cellulose, available from Hercules Incorporated | 20.00% | - | - | - |
| Natrosol^{®} 250 LR hydroxyethyl cellulose, available from Hercules Incorporated | - | 25.09% | - | - |
| Natrosol^{®} HIVIS hydroxyethyl cellulose, available from Hercules Incorporated | - | - | 20.00% | -% |
| Celvol^{®} 540S polyvinyl alcohol, available from Celanese Chemicals | - | - | - | 20.00% |

**Table 2: Long-term viscosity stability**

| Brookfield Viscosity @ | **Suspension 1** **cPs** | **Suspension 2** **cPs** | **Suspension 3** **cPs** | **Suspension 4**v **cPs** |
|---|---|---|---|---|
| T₀ | 1570 | 1660 | 2040 | 805 |
| 1-wk | 1600 | 1690 | 2120 | - |
| 2-wk | 1560 | 1690 | 2140 | - |
| 3-wk | 1620 | 1690 | 2120 | - |
| 6-wk | 1620 | 1690 | 2140 | - |

The following examples illustrate the typical performance of this type of suspensions of the present invention in completion fluids and low temperature oil-well cement slurry compositions.

### Application in Completion Fluids

The thickening efficiency of Suspension N° 3 (Natrosol^{®} HIVIS HEC suspension) was evaluated against its precursor by dissolving 2.8 lb/bbl (0.8 wt.%) equivalent dry HEC in NaCl saturated brine. The NaCl saturated brine was first prepared by dissolving 360 g NaCl in 1000 ml Deionized water. Then, 2.8 g dry HEC or 14.0 g as-is Suspension N° 3 was added into 420 g NaCl saturated water while mixing on Hamilton beach mixer (∼ 11,500 rpm). To speed up the hydration of the polymer, 1-ml 10% NaOH solution was added into the polymer solution to raise the pH. To reduce/eliminate excess foaming, a few drops of defoamer, (Advantage^{®} A96 defoamer, available from Hercules Incorporated), were added. The solution was mixed for an elapsed time of 90 minutes. Measurement of both Fann rheology as well as fluid loss properties was then performed after 16 hours static ageing in a water bath at 25°C.

Data in Table 3 indicates that suspension N° 3 (Example 2) performs slightly better than its dry precursor (Comparative Example 1) when used at a same active dosage in NaCl saturated water. Both Fann apparent viscosity and yield point properties are higher while the filtrate loss is lower (better) with the suspension.

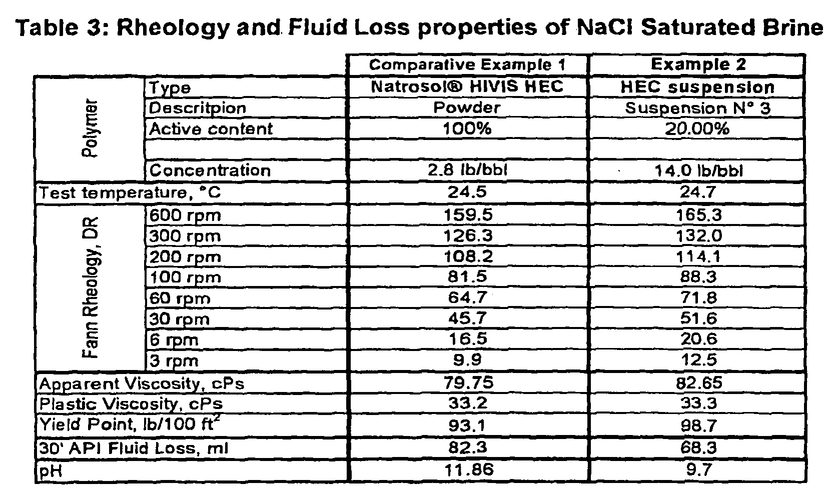

It can be seen from Table 3 that the aqueous suspension of HEC, subject of this invention, is an effective viscosifier and fluid loss reducer of completion/workover fluids.

### Application in Oil-well Cement Slurries

The following examples illustrate the performance of HEC aqueous Suspensions (N° 1 & 2, respectively) in a low temperature oil-well cement slurry composition. The performance of the suspensions was compared against their corresponding dry precursors at equivalent active content.

The oil-well cement slurries were formulated using additives and mixing/formulation techniques commonly employed in the industry as recommended by the American Petroleum Institute (API). All concentrations of additives in the slurry compositions (Examples 3-6) are based on weight of cement (bwoc).

The oil-well cement slurry was prepared by adding the cement dry mixture into the mix-water, eventually, containing the fluid loss additive (FLAC). The dry mixture consists of 600 g Cemoil G cement, 3.3 g Naphthalene Sulfonate Condensate Na Salt dispersant (Lomar^{®} D cement dispersant available from Cognis)(0.55 wt. % bwoc) and 2.7 g dry FLAC (0.45 wt % bwoc). Because of its lower Mw, Natrosol^{®} 250 LR HEC was used at higher dosage (4.8 g or 0.80% bwoc). For the comparative experiment with the FLAC suspensions (Suspensions N° 1 & 2), the polymer suspension was added into the mix-water prior to adding the dry mixture. In all preparations, a few drops of defoamer (Advantage^{®} A96 defoamer, available from Hercules Incorporated) were added to reduce excessive foaming of the cement slurry.

The performance testing of the oil-well cement slurries were conducted in terms of rheology and fluid loss control properties at relatively low temperature. Typically, the "mixing rheology" was measured with Fann type viscometer just after the slurry preparation at room temperature approximately 27°C (∼ 80°F), to simulate the mixing and pumping at the surface, while the "API rheology" was measured after conditioning the slurry at 27°C(80°F) for 20 minutes. The fluid loss control properties were measured at 27°C (80°F) after the slurry conditioning.

Data in Table 4 shows that FLAC suspensions provide excellent fluid loss control properties. The filtrate volumes are equivalent to the corresponding dry precursor. It is interesting to see that Suspension N° 2, even at higher dosage, provides lower rheology with outstanding fluid loss control properties than Suspension N° 1.

**Table 4: Comparative rheology and fluid loss properties of cement slurries**

| | **Comp. Example 3** | | **Example 4** | | **Comp. Example 5** | | **Example 6** | |
|---|---|---|---|---|---|---|---|---|
| **Ingredients** | **g** | **bwoc** | **g** | **bwoc** | **g** | **bwoc** | **g** | **bwo** |
| Cemoil G cement | 600 | - | 600 | - | 600 | - | 600 | - |
| LOMAR D cement dispersant | 3.3 | 0.55% | 3.3 | 0.55% | 3.3 | 0.55% | 3.3 | 0.55% |
| HEC(Natrosol®180 GXR) | 2.7 | 0.45% | - | - | - | - | - | - |
| Suspension N° 1 | - | - | 13.5 | 2.25% | - | - | - | - |
| HEC (Natrosol®250 LR) | - | - | - | - | 4.8 | 0.80% | - | - |
| Suspension N° 2 | - | - | - | - | - | - | 19.20 | 3.20% |
| Demi-water | 264 | 44% | 256.85 | 44% | 264 | 44% | 254.40 | 44% |
| Fann Type Rheology | Mixing Rheology | API Rheology | Mixing Rheology | API Rheology | Mixing Rheology | API Rheology | Mixing Rheology | API Rheok |
| **Test Temperature** | **25.9°C** | **26.2°C** | **25.9°C** | **26.3 °C** | **25.7 °C** | **26.2 °C** | **25.8 °C** | **26.1 °C** |
| 300-rpm DR | 303 | 258 | 289 | 254 | 159 | 141 | 194 | 172 |
| 200-rpm DR | 224 | 187 | 212 | 186 | 116 | 301 | 141 | 126 |
| 100-rpm DR | 133 | 108 | 126 | 108 | 67 | 56 | 88 | 73 |
| 6-rpm DR | 27 | 5 | 27 | 17 | 17 | 8 | 57 | 15 |
| 3-rpm DR | 21 | 11 | 21 | 12 | 14 | 6 | 50 | 12 |
| **P.V. (1.5xFx(300 DR - 100 DR), cPs** | **255** | **225** | **244.5** | **219** | **138** | **127.5** | **159** | **148.5** |
| **Yv (Fx300 DR - PV), lb/100 ft²** | **48** | **33** | **44.5** | **35** | **21** | **13.5** | **35** | **23.5** |
| **Filtrate collected under 1000 psi** | **Static Fluid Loss Cell** | | | | **Static Fluid Loss Cell** | | | |
| **Test Temperature** | **27 °C** | | **27°C** | | **27 °C** | | **27 °C** | |
| **30' API Fluid Loss, cc** | **34.8** | | **36.8** | | **22.0** | | **22.4** | |

It can be seen from Table 4 that the FLAC suspensions (Suspensions N° 1 & 2), subject of this invention, are effective fluid loss control additives of oil-well cement slurries.

## Claims

1. A suspension composition comprising
a) an oil field servicing fluid selected from the group consisting of drilling fluids, completion/workover fluids, and oil well cementing fluids, and
b) a fluid polymer suspension comprising a water soluble polymer suspended in an aqueous solution of a potassium phosphate compound, wherein the water soluble polymer is selected from the group consisting of water soluble polysaccharides and polyvinyl alcohol (PVA),
wherein the potassium phosphate compound is selected from the group consisting of potassium phosphate, potassium phosphate dibasic (K₂HPO₄), potassium phosphate tribasic (K₃PO₄), potassium phosphate monobasic (KH₂PO₄) and phosphoric acid potassium salt (2:1) (KH₅(PO₄)²) and mixtures thereof.

2. The suspension composition of claim 1, further comprising a stabilizer.

3. The suspension composition of claim 2, wherein the stabilizer is selected from the group consisting of carboxymethylcellulose (CMC), xanthan gum and mixtures thereof.

4. The suspension composition of claim 1, wherein the cellulose ether is selected from the group consisting of hydroxyethyl cellulose (HEC), methyl cellulose (MC), hydroxypropyl cellulose (HPC), ethyl hydroxyethyl cellulose (EHEC), methyl hydroxyethyl cellulose (MHEC), hydrophobically modified hydroxyethyl cellulose (HMHEC), hydrophobically modified ethyl hydroxyethyl cellulose (HMEHEC), hydrophobically modified methyl hydroxyethyl cellulose (HMMHEC), ethyl cellulose (EC), methyl hydroxypropyl cellulose (MHPC), and carboxymethyl hydroxyethyl cellulose (CMHEC).

5. The suspension composition of claim 1, wherein the potassium phosphate compound comprises potassium phosphate dibasic (K₂HPO₄).

6. The suspension composition of claim 5, wherein the water soluble polymer comprises HEC.

7. The suspension composition of claim 1, wherein the suspension composition further comprises an effective amount of a stabilizer wherein the stabilizer is selected from the group consisting of carboxymethylcellulose (CMC), xanthan gum and mixtures thereof.

8. The suspension composition of claim 1, wherein the oil field servicing fluid comprises a drilling fluid.

9. The suspension composition of claim 1, wherein the oil field servicing fluid comprises a completion/workover fluid.

10. The suspension composition of claim 1, wherein the oil field servicing fluid comprises an oil well cementing fluid.

## Patentansprüche

1. Suspensionszusammensetzung, umfassend
(a) ein Ölfeldwartungsfluid, ausgewählt aus der Gruppe bestehend aus Bohrfluiden, Beendigungs/Fertigstellungsfluiden und Ölquellenzementierungsfluiden, und
(b) eine Fluidpolymersuspension, umfassend ein wasserlösliches Polymer, das in einer wässrigen Lösung aus einer Kaliumphosphatverbindung suspendiert ist,
worin das wasserlösliche Polymer ausgewählt ist aus der Gruppe bestehend aus wasserlöslichen Polysacchariden und Polyvinylalkohol (PVA),
worin die Kaliumphosphatverbindung ausgewählt ist aus der Gruppe bestehend aus Kaliumphosphat, zweibasischem Kaliumphosphat (K₂HPO₄), dreibasischem Kaliumphosphat (K₃PO₄), einbasischem Kaliumphosphat (KH₂PO₄) und Phosphorsäure-Kaliumsalz (2:1) (KH₅(PO₄)²) und Mischungen davon.

2. Suspensionszusammensetzung nach Anspruch 1, weiterhin umfassend einen Stabilisator.

3. Suspensionszusammensetzung nach Anspruch 2, worin der Stabilisator ausgewählt ist aus der Gruppe, bestehend aus Carboxymethylcellulose (CMC), Xanthangummi und Mischungen davon.

4. Suspensionszusammensetzung nach Anspruch 1, worin der Celluloseether ausgewählt ist aus der Gruppe bestehend aus Hydroxyethylcellulose (HEC), Methylcellulose (MC), Hydroxypropylcellulose (HPC), Ethylhydroxyethylcellulose (EHEC), Methylhydroxyethylcellulose (MHEC), hydrophob modifizierter Hydroxyethylcellulose (HMHEC), hydrophob modifizierter Ethylhydroxyethylcellulose (HMEHEC), hydrophob modifizierter Methylhydroxyethylcellulose (HMMHEC), Ethylcellulose (EC), Methylhydroxypropylcellulose (MHPC) und Carboxymethylhydroxyethylcellulose (CMHEC).

5. Suspensionszusammensetzung nach Anspruch 1, worin die Kaliumphosphatverbindung zweibasisches Kaliumphosphat (K₂HPO₄) umfasst.

6. Suspensionszusammensetzung nach Anspruch 5, worin das wasserlösliche Polymer HEC umfasst.

7. Suspensionszusammensetzung nach Anspruch 1, worin die Suspensionszusammensetzung weiterhin eine effektive Menge eines Stabilisators umfasst, worin der Stabilisator ausgewählt ist aus der Gruppe bestehend aus Carboxymethylcellulose (CMC), Xanthangummi und Mischungen davon.

8. Suspensionszusammensetzung nach Anspruch 1, worin die Ölfeldwartungsflüssigkeit eine Bohrflüssigkeit umfasst.

9. Suspensionszusammensetzung nach Anspruch 1, worin die Ölfeldwartungsflüssigkeit ein Beendigungs/Fertigstellungsfluid umfasst.

10. Suspensionszusammensetzung nach Anspruch 1, worin die Ölfeldwartungsflüssigkeit ein Ölquellenzementierungsfluid umfasst.

## Revendications

1. Composition de suspension comprenant :
a) un fluide d'entretien de champs pétroliers sélectionné dans le groupe constitué par des fluides de forage, des fluides de complétion/ reconditionnement, et des fluides de cémentation de puits pétroliers, et
b) une suspension polymérique fluidisée comprenant un polymère soluble dans l'eau en suspension dans une solution aqueuse d'un composé de phosphate de potassium, dans laquelle le polymère soluble dans l'eau est sélectionné dans le groupe constitué par des polysaccharides solubles dans l'eau et de l'alcool polyvinylique (PVA),
dans laquelle le composé de phosphate de potassium est sélectionné dans le groupe constitué par le phosphate de potassium, le phosphate de potassium dibasique (K₂HPO₄), le phosphate de potassium tribasique (K₃PO₄), le phosphate de potassium monobasique (KH₂PO₄) et un sel de potassium de l'acide phosphorique (2:1) (KH₅(PO₄)²) et des mélanges de ceux-ci.

2. Composition de suspension selon la revendication 1, comprenant en outre un stabilisant.

3. Composition de suspension selon la revendication 2, dans laquelle le stabilisant est sélectionné dans le groupe constitué par la carboxyméthylcellulose (CMC), la gomme xanthane et des mélanges de celles-ci.

4. Composition de suspension selon la revendication 1, dans laquelle l'éther de cellulose est sélectionné dans le groupe constitué par l'hydroxyéthylcellulose (HEC), la méthylcellulose (MC), l'hydroxypropylcellulose (HPC), l'éthylhydroxyéthylcellulose (EHEC), la méthylhydroxyéthylcellulose (MHEC), l'hydroxyéthylcellulose modifiée de manière hydrophobe (HMHEC), l'éthylhydroxyéthylcellulose modifiée de manière hydrophobe (HMEHEC), la méthylhydroxyéthylcellulose modifiée de manière hydrophobe (HMMHEC), l'éthylcellulose (EC), la méthylhydroxypropylcellulose (MHPC), et la carboxyméthylhydroxyéthylcellulose (CMHEC).

5. Composition de suspension selon la revendication 1, dans laquelle le composé de phosphate de potassium comprend du phosphate de potassium dibasique (K₂HPO₄).

6. Composition de suspension selon la revendication 5, dans laquelle le polymère soluble dans l'eau comprend de la HEC.

7. Composition de suspension selon la revendication 1, ladite composition pour suspension comprenant en outre une quantité efficace d'un stabilisant, ledit stabilisant étant sélectionné dans le groupe constitué par la carboxyméthylcellulose (CMC), la gomme xanthane et des mélanges de celles-ci.

8. Composition de suspension selon la revendication 1, dans laquelle le fluide d'entretien de champs pétroliers comprend un fluide de forage.

9. Composition de suspension selon la revendication 1, dans laquelle le fluide d'entretien de champs pétroliers comprend un fluide de complétion/ reconditionnement.

10. Composition de suspension selon la revendication 1, dans laquelle le fluide d'entretien de champs pétroliers comprend un fluide de cémentation de puits pétroliers.
